(19) Europäisches Patentamt
European Patent Office
Office européen des brevets

(11) Veröffentlichungsnummer: **0 012 931**
**B1**

(12) # EUROPÄISCHE PATENTSCHRIFT

(45) Veröffentlichungstag der Patentschrift: **14.09.83**

(51) Int. Cl.³: **C 08 G 69/26**

(21) Anmeldenummer: **79105100.6**

(22) Anmeldetag: **12.12.79**

(54) **Copolyamide auf der Basis eines Gemisches cycloaliphatischer Amine und daraus erhaltene Formkörper.**

(30) Priorität: **23.12.78 DE 2855928**

(43) Veröffentlichungstag der Anmeldung: **09.07.80 Patentblatt 80/14**

(45) Bekanntmachung des Hinweises auf die Patenterteilung: **14.09.83 Patentblatt 83/37**

(84) Benannte Vertragsstaaten: **DE FR GB IT NL**

(56) Entgegenhaltungen:
**EP A 0 001 039**
**DE A 2 217 016**
**FR A 1 118 435**
**FR A 2 134 415**
**US A 3 842 045**

**Die Akte enthält technische Angaben, die nach dem Eingang der Anmeldung eingereicht wurden und die nicht in dieser Patentschrift enthalten sind.**

(73) Patentinhaber: **BAYER AG**
**Zentralbereich Patente, Marken und Lizenzen**
**D-5090 Leverkusen 1, Bayerwerk (DE)**

(72) Erfinder: **Meyer, Rolf-Volker, Dr.**
**Buchheimerstrasse 23**
**D-4150 Krefeld (DE)**
Erfinder: **Dhein, Rolf, Dr.**
**Deswatinesstrasse 30**
**D-4150 Krefeld (DE)**
Erfinder: **Fahnler, Friedrich, Grad.-Ing.**
**Wimmersweg 60**
**D-4150 Krefeld 1 (DE)**
Erfinder: **Michael, Dietrich, Dr.**
**Deswatinesstrasse 57**
**D-4150 Krefeld (DE)**
Erfinder: **Rudolph, Hans, Dr.**
**Haydnstrasse 9**
**D-4150 Krefeld (DE)**
Erfinder: **Nielinger, Werner, Dr.**
**Bärenstrasse 21**
**D-4150 Krefeld (DE)**

**EP 0 012 931 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

# Copolyamide auf der Basis eines Gemisches cycloaliphatischer Amine und daraus erhaltene Formkörper

Die vorliegende Erfindung betrifft thermoplastisch verformbare Copolyamide mit erhöhter Fließfähigkeit und verbessertem Verarbeitungsverhalten.

Für viele Einsatzgebiete ist die von den üblichen Polyamiden wie 6-Polyamid oder 6,6-Polyamid bekannte günstige Eigenschaftskombination gegenüber anderen thermoplastisch verarbeitbaren Materialien von großem Vorteil. Wegen der Teilkristallinität dieser Polyamid-Typen, die einen großen Teil der besonders guten Eigenschaften verursacht, sind jedoch Formteile aus diesen Polyamiden immer trüb und daher in allen Fällen, in denen wenig opake Formteile gefordert werden, nur bedingt verwendbar.

Es hat daher nicht an Versuchen gefehlt, Polyamide herzustellen, die neben ihrem amorphen Charakter und der hiermit verbundenen Transparenz auch noch die günstigen Eigenschaften von Polyamid-6 oder -6,6 aufweisen.

Einer dieser Versuche ist der Einsatz von Bis-(4-aminocyclohexyl)-methan bei der Herstellung von Polyamiden. So sind transparente Polyamide aus dem genannten Amin und aromatischen Dicarbonsäuren wie Isophthalsäure (US-PS 2 696 482) oder Terephthalsäure (US-PS 2 516 585) bekannt. Diese Produkte sind jedoch wegen ihrer hohen Schmelzviskosität thermoplastisch nur schwierig verarbeitbar.

Es wurde auch versucht, transparente Polyamide aus Bis-(4-aminocyclohexyl)-methan und weiteren polyamidbildenden Komponenten wie Adipinsäure, Hexamethylendiamin und ε-Caprolactam herzustellen. Diese Polyamide sind jedoch äußerst unbeständig gegen Lösungsmittel und bilden unter Eintrübung Sphärolithe.

Die in der DOS 1 595 354 beschriebenen Polyamide auf Basis von Bis-(4-aminocyclohexyl)-propan und Adipinsäure neigen zwar weniger zur Kristallisation, die thermoplastische Verarbeitung dieser Polyamide ist jedoch infolge ihrer hohen Erweichungspunkte erheblich erschwert.

Niedriger schmelzende Polyamide aus Bis-(4-aminocyclohexyl)-methan und aliphatischen Dicarbonsäuren wie Adipinsäure (US-PS 2 585 163) sind entweder nicht transparent oder neigen zur Nachkristallisation und damit zur Eintrübung.

In der DOS 1 933 395 werden transparente Polyamide beschrieben, dis Bis-(4-aminocyclohexyl)-methan und Hexamethylendiamin als Diaminkomponenten und Isophthalsäure und Terephthalsäure als Dicarbonsäuren in eng definierten Mischungsverhältnissen enthalten müssen.

Ein besonderer Nachteil dieser Polyamide ist, daß der Anteil des Bis-(4-aminocyclohexyl)-methan nur maximal 50 Mol-%, d. h. maximal ca. 65 Gew.-%, betragen darf. Produkte mit höherem Gehalt an Bis-(4-aminocyclohexyl)-methan haben eine zu hohe Schmelzviskosität, so daß sie nach den in der Praxis üblichen Spritzgußverfahren nicht mehr verformt werden können.

In der DOS 2 125 906 sind Copolyamide aus Bis-(4-aminocyclohexyl)-methan und 3-Äthyl-1,10-decandicarbonsäure beschrieben. Die transparenten Produkte haben jedoch den Nachteil, daß die erforderliche 3-Äthyl-1,10-decandicarbonsäure nur schwer zugänglich ist.

Schließlich sind aus der DOS 2 642 244 transparente Polyamide aus Bis-(4-aminocyclohexyl)-methanen, Isophthalsäure und u. a. Salzen aus aliphatischen Dicarbonsäuren und aliphatischen Diaminen, bei denen je Amidgruppe die durchschnittliche Zahl der Methylengruppen mindestens 9 betragen muß, bekannt. Diese Polyamide ziegen aber offenbar wegen der langkettigen Anteile eine unzureichende Beständigkeit der Transparenz im kochenden Wasser und eine nicht ausreichende Wärmeformbeständigkeit.

Die bisher vorgeschlagenen transparenten Polyamide zeigen daher Nachteile bezüglich chemischer Beständigkeit, hoher Schmelzviskosität und damit schlechter Verarbeitbarkeit.

Außerdem wird gemäß dem Stand der Technik immer reines 4,4'-Diaminodicyclohexylmethan verwendet, wobei nur die Verhältnisse der verschiedenen Stereoisomeren (trans, trans ; trans, cis ; cis, cis) unterschiedlich sein können.

Stellungsisomere Diaminodicyclohexylmethane wie 2,4'-Diaminodicyclohexylmethane und/oder 2,2'-Diaminodicyclohexylmethane werden nicht mitverwendet.

Dies ist um so bemerkenswerter, da bei der Herstellung von 4,4'-Diaminodicyclohexylmethanen aus Diaminodiphenylmethanen technischer Qualität vor der Hydrierung eine zusätzliche Feindestillation zur Isolierung durchgeführt oder aber ein spezielles Herstellungsverfahren für 4,4'-Diaminodiphenylmethan gewählt werden muß.

Überraschenderweise wurde nun gefunden, daß man gut verarbeitbare transparente Copolyamide mit günstiger Schmelzviskosität erhält, wenn man zur Polykondensation als Aminkomponente allein oder zumindest teilweise ein Gemisch cycloaliphatischer Amine der allgemeinen Formel A

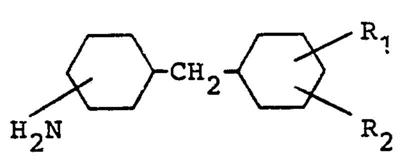

mit $R_1$ = H, $NH_2$ 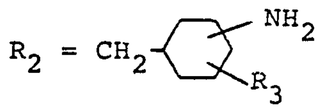

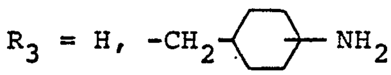

verwendet, die man durch Hydrierung der durch saure Kondensation von Anilin und Formaldehyd herstellbaren Gemische entsprechender aromatischer Amine erhält.

Gegenstand der Erfindung sind daher Copolyamide, erhalten durch Polykondensation von äquimolaren Mengen

I. wenigstens einer aliphatischen oder cycloaliphatischen Dicarbonsäure mit bis zu $C_{20}$ und/oder einer aromatischen Dicarbonsäure mit $C_7$-$C_{20}$ außer Azelainsäure und gegebenenfalls Isophthalsäure und/oder Adipinsäure und

II. einem Amingemisch bestehend aus

1. 0,1 bis 100 Mol-% von Gemischen cycloaliphatischer Amine, die sich zusammensetzen aus

a) 0 bis 3 Mol-% 4-Aminodicyclohexylmethan

b) 70 bis 99 Mol-%, bevorzugt 75 bis 95 Mol-%, 4,4'-Diaminodicyclohexylmethanen

c) 1 bis 30 Mol-%, bevorzugt 5 bis 25 Mol-%, 2,4'-Diaminodicyclohexylmethanen

d) 0 bis 2 Mol-%, bevorzugt 0 bis 1 Mol-%, 2,2'-Diaminodicyclohexylmethanen und

e) 0 bis 15 Mol-%, bevorzugt 0,1 bis 5 Mol-% von polynuklearen Polyaminen der allgemeinen Formel (A)

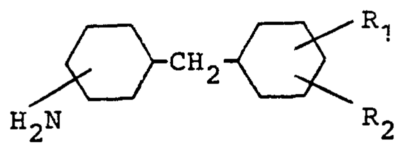 (A)

mit $R_1$ = $NH_2$, H und 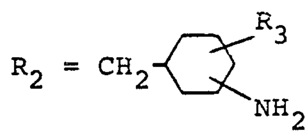

mit $R_3$ wie oben definiert, und

2. 0 bis 99,9 Mol-% wenigstens eines aliphatischen oder von (1) verschiedenen cycloaliphatischen Diamins mit mindestens 6 C-Atomen im Molekül, wobei die Summen aus (1) und (2) sowie aus (a) bis (e) jeweils 100 Mol-% betragen müssen.

In der europäischen Patentanmeldung Nr. 78100348.8 (EOS 0001039) werden Copolyamide erhalten durch Polykondensation von

1. 70-100 Mol-%, vorzugsweise 80-100 Mol-%, eines Gemisches stellungsisomerer Diaminodicyclohexylmethane, das sich zusammensetzt aus

a) 70-99 Mol-%, bevorzugt 75-95 Mol-%, 4,4'-Diamino-Isomeren

b) 1-30 Mol-%, bevorzugt 3-20 Mol-%, 2,4'-Diamino-Isomeren

c) 0-2 Mol-%, bevorzugt 0-1 Mol-%, 2,2'-Diamino-Isomeren und

2. 0-30 Mol-%, vorzugsweise 0-20 Mol-%, eines nichtcyclischen, aliphatischen Diamins mit $C_6$-$C_{12}$ und/oder eines von den unter 1) genannten Diaminodicyclohexylmethanen unterschiedlichen cycloaliphatischen Diamins mit $C_8$-$C_{15}$, wobei das molare Verhältnis aller cycloaliphatischer Diamine aus 1) und 2) zu den nichtcyclischen, aliphatischen Diaminen mindestens 4 : 1, vorzugsweise mindestens 5 : 1, betragen soll und die Summe aus a)-c) bzw. 1)-2) immer 100 Mol-% ergeben muß und

3. äquivalenten Mengen Dicarbonsäuren bestehend aus

d) 50-100 Mol-%, vorzugsweise 70-85 Mol-%, Azelainsäure und

e) 50-0 Mol-%, vorzugsweise 30-15 Mol-%, Isophthalsäure und/oder Adipinsäure

geschützt,

wobei sich entweder die Dicarbonsäurekomponente aus wenigstens 2 Dicarbonsäuren oder die Diaminkomponente aus dem unter 1) genannten Isomerengemisch und wenigstens einem unter 2) genannten Diamin zusammensetzen muß.

Erfindungsgemäß besonders bevorzugt sind Polyamide, die durch Polykondensation von Dicarbonsäuren mit 0,5 bis 20 Mol-% der Komponenten (1) und 80 bis 99,5 Mol-% der Komponenten (2) erhalten werden, da sich diese Produkte besonders gut thermoplastisch verarbeiten lassen und transparente Polyamide auch in dicken Schichten ergeben. Ebenso zeichnen sich besonders Polyamide aus, die durch Polykondensation von Dicarbonsäuren mit 70 bis 100 Mol-% der Komponenten (1) und 0 bis 30 Mol-% der Komponenten (2) erhalten werden, da sie sich besonders zur Herstellung transparenter Formkörper mit besonders hoher Kerbschlagzähigkeit eignen.

Als aliphatische oder cycloaliphatische Dicarbonsäuren werden solche mit bis zu 20 C-Atomen eingesetzt ; vor allem eignen sich als aliphatische Dicarbonsäuren Verbindungen der allgemeinen Formel

$$HOOC—(CH_2)_m—COOH$$

wobei m eine ganze Zahl von 4 bis 10 bedeutet, als cycloaliphatische Dicarbonsäuren die stereoisomeren 1,3-Cyclopentandicarbonsäuren, 1,3- und 1,4-Cyclohexandicarbonsäure und 4,4'-Dicyclohexyl-dicarbonsäuren. Insbesondere eignet sich Adipinsäure.

Als aromatische Dicarbonsäuren werden solche mit 7 bis 20, vorzugsweise 8 bis 15 C-Atomen, z. B. einkernige Dicarbonsäuren der Benzolreihe, 1,4-, 1,5- und andere Naphthalindicarbonsäuren, 4,4'-Diphenyldicarbonsäure, Diphenylsulfondicarbonsäuren und Benzophenondicarbonsäuren, vorzugsweise Terephthalsäure und Isophthalsäure, eingesetzt.

Es können auch Gemische der genannten Dicarbonsäuren verwendet werden.

Der Anteil an Dreikerntriaminen gemäß der allgemeinen Formel (A) im Gemisch cycloaliphatischer Amine beträgt 0 bis 15 Mol-%, der Anteil von Vierkerntetraaminen gemäß der allgemeinen Formel (A) beträgt 0 bis 2 Mol-%.

Als zusätzliche Diamine gemäß 2) eignen sich aliphatische Diamine mit 6 bis 20 C-Atomen, vorzugsweise Hexamethylendiamin und methylsubstituierte Hexamethylendiamin und methylsubstituierte Hexamethylendiamine sowie cycloaliphatische Diamine wie z. B. 1,3-, 1,4-Bisaminomethylcyclohexan oder Isophorondiamin, sowie araliphatische Diamine mit $C_7$-$C_{20}$, vorzugsweise m- und p-Xylylendiamin, 2,5-Dimethyl-p-xylylendiamin oder 2,4-Dimethyl-m-xylylendiamin. Besonders bevorzugt wird als Aminkomponente (2) Hexamethylendiamin verwendet.

Die zur Herstellung der erfindungsgemäßen Copolyamide verwendbaren Gemische cycloaliphatischer Amine gemäß 1) lassen sich in einfacher Weise aus Anilin und Formaldehyd und anschließender Hydrierung der aromatischen Mehrkernpolyamine gewinnen.

Je nach Bedarf kann die Menge und das relative Verhältnis an Monoamin gemäß 1a) und Polyamin gemäß 1e) destillativ eingestellt werden, wobei das Verhältnis von Monoamin zu Polyamin im Bereich von 2 : 1 bis 0,2 : 1 liegen sollte.

Die Stellungsisomeren des Gemisches cycloaliphatischer Amine bestehen ihrerseits aus trans, trans-, cis, trans- und zu einem geringen Anteil aus cis, cis-Isomeren.

Die cycloaliphatischen Amingemische sind farblose bis gelbe, hochviskose Flüssigkeiten ; mit steigendem Gehalt an Diaminen, insbesondere an 4,4'-Diaminodicyclohexylmethanen beginnen die Gemische zunehmend zu kristallisieren.

Im Vergleich zu analogen Copolyamiden, die nur mit 4,4'-Diaminodicyclohexylmethan hergestellt wurden, zeigen die erfindungsgemäßen Copolyamide eine verringerte Schmelzviskosität, insbesondere bei kleinen Anteilen an Mehrkernpolyaminen gemäß 1e) und damit eine bessere Verarbeitbarkeit.

Als Folge des durch Verwendung des Amingemisches erzielbaren höheren Molekulargewichtes wird neben einer verbesserten Transparenz auch ein verbessertes Zähigkeitsniveau erreicht.

Durch abgestimmte Monoamin/Triamin-Verhältnisse lassen sich verzweigte Copolyamide herstellen, die sich durch besondere Kratzfestigkeit auszeichnen.

Die Herstellung der Copolyamide erfolgt nach den für die Herstellung von Polyamiden aus Diaminen und Dicarbonsäuren üblichen Verfahren. Man kann das Gemisch der Ausgangskomponenten auf Temperaturen zwischen 190 und 230 °C erhitzen und in diesem Temperaturbereich vorkondensieren. Nach Beendigung dieser Vorkondensation wird bei Temperaturen zwischen 240 und 300 °C zu Ende polykondensiert.

Gegen Ende der Polymerisation kann unter Vakuum kondensiert werden, dies ist jedoch keinesfalls erforderlich.

Die Vorkondensation kann mit oder ohne Zusatz von Wasser erfolgen ; sie kann bei Atmosphärendruck oder in geschlossenen Autoklaven unter dem Dampfdruck des Wassers durchgeführt werden.

Vorzugsweise wird in Gegenwart von 10 bis 20 Gew.-% Wasser bei geschlossenem Autoklaven vorkondensiert. Die Polykondensation ausgehend von den Salzen der Monomeren durchzuführen, ist, besonders wenn die Vorkondensation in Gegenwart von Wasser stattfindet, nicht erforderlich.

Der während der Polykondensation auftretende Verlust an Diamin wird vorzugsweise durch Einsatz eines entsprechenden Überschusses an Diamin kompensiert.

Das Molekulargewicht der Polyamide kann in bekannter Weise durch Carbonsäuren oder Amine geregelt werden.

Die relative Viskosität der erfindungsgemäßen Copolyamide sollte oberhalb 2,2 liegen, vorzugsweise zwischen 2,4 und 3,5, gemessen an einer 1 %igen Lösung des Polyamids in m-Kresol bei 25 °C in einem Ubbelohde-Viskosimeter.

Polyamiden gemäß der Erfindung können auch verschiedene Zusätze, die für übliche Polyamide angewendet werden, zugegeben werden z. B. Flammschutzmittel, Hitze- und UV-Stabilisatoren, Antioxidantien und Pigmente, wobei die Zugabe während irgendeiner gewünschten Stufe vor oder nach der Polymerisation in Übereinstimmung mit bekannten Ansätzen erfolgt. Gleichfalls sind die mit 10 bis 50 Gew.-% Glasfasern verstärkten erfindungsgemäßen Polyamide hochwertige Produkte.

Die Copolyamide gemäß der Erfindung besitzen eine verbesserte Transparenz, bei vergleichbaren

Molgewichten eine geringere Schmelzviskosität und damit eine bessere Verarbeitbarkeit neben der verbesserten Wärmeformbeständigkeit, die für mit cycloaliphatischen Komponenten modifizierte Polyamide bekannt ist.

Die Copolyamide dienen zur Herstellung von Formkörpern vielfältiger Art, wie z. B. Folien, Platten und Spritzgußteilen.

## Beispiel 1

Man füllt 3,19 kg (21,8 Mol) Adipinsäure, 2,10 kg (18,1 Mol) Hexamethylendiamin und 0,79 kg (3,76 Mol, entspricht ca. 17 Mol-% des Diamin-Anteils) hydriertes Amingemisch I zusammen mit 0,6 l Wasser in einen Autoklaven.

Man heizt unter $N_2$-Atmosphäre auf ca. 200 °C auf, wobei bei 100 °C das Rührwerk eingeschaltet wird und hält das Reaktionsgemisch 1 h unter Eigendruck. Dann wird langsam entspannt, auf 270 °C erhitzt und noch 4 h bei 270 °C polykondensiert.

Das entstandene fast farblose Polyamid ($\eta_{rel}$ 3,2)* wird durch ein Wasserbad abgesponnen, granuliert und getrocknet.

An Normkleinstäben wird gemäß DIN 53 460 eine Wärmeformbeständigkeit nach Vicat (Methode B) von 206 °C, nach DIN 53 453 eine Kerbschlagzähigkeit von 4,4 kJ/$m^2$, die Prüfung auf Schlagzähigkeit (DIN 53 453) ergab bei 10 Proben keinen Bruch.

Zusammensetzung des hydrierten Aingemisches I :

0,1 % 4-Aminodicyclohexylmethan,
94,4 % 4,4'-Diaminodicyclohexylmethane
5,0 % 2,4'-Diaminodicyclohexylmethane
0,2 % 2,2'-Diaminodicyclohexylmethane
0,3 % cycloaliphatische Dreikerntriamine

## Beispiel 2

Wie in Beispiel 1 beschrieben, wird aus 4,65 kg (31,3 Mol) Adipinsäure, 2,50 kg (21,6 Mol) Hexamethylendiamin und 2,06 kg (9,7 Mol) hydriertem Amingemisch I ein Polyamid hergestellt. Die rel. Viskosität des fast farblosen, brillantglänzenden Produktes beträgt 2,9, die Wärmeformbeständigkeit nach Vicat (Methode B) 176 °C. Die Kerbschlagzähigkeit beträgt 5,9 kJ/$m^2$, die Prüfung auf Schlagzähigkeit ergab bei 10 Proben keinen Bruch.

Das bis zu Schichtdicken von 1,5 mm transparente Polyamid läßt sich auf handelsüblichen Spritzgießmaschinen besser und schneller verarbeiten als 6,6-Polyamid mit vergleichbarer relativer Viskosität.

## Beispiel 3

3,2 kg (19,3 Mol) Isophthalsäure, 1,93 kg (16,6 Mol) Hexamethylendiamin und 0,63 kg (3,0 Mol, d. h. ca. 15 Mol-% des Aminanteils) hydriertes Amingemisch I werden zusammen mit 20 g Benzoesäure als Molgewichtsregler und 0,5 l Wasser in einen Autoklaven eingewogen und wie in Beispiel 1 beschrieben polykondensiert.

Das erhaltene schwach gelbe transparente Polyamid hat eine rel. Viskosität von 2,5, eine Wärmeformbeständigkeit von 144 °C und eine Kerbschlagzähigkeit von 3,9 kJ/$m^2$. Die Prüfung auf Schlagzähigkeit ergab bei 10 Proben keinen Bruch.

Bei Verwendung von 4,4'-Diaminodicyclohexylmethan anstelle des hydrierten Amingemisches I erhält man ein transparentes Polyamid mit einer rel. Viskosität von 2,4 X) einer Wärmeformbeständigkeit von 143 °C und einer Kerbschlagzähigkeit von 3,5 kJ/$m^2$.

## Beispiel 4

Beispiel 2 wird wiederholt mit dem Unterschied, daß statt des hydrierten Amingemisches I ein hydriertes Amingemisch III mit der Zusammensetzung

88,5 % 4,4'-Diaminodicyclohexylmethane
11,0 % 2,4'-Diaminodicyclohexylmethane
0,5 % 2,2'-Diaminodicyclohexylmethane.

eingesetzt wird. Man erhält ein bis zu Schichtdicken von 2,5 mm transparentes Polyamid mit einer relativen Viskosität von 2,8 X), einer Wärmeformbeständigkeit von 172 °C und einer Kerbschlagzähigkeit von 5,5 kJ/$m^2$. Die Prüfung auf Schlagzähigkeit ergab bei 10 Proben keinen Bruch.

* in 1 %iger Lösung in m-Kresol bei 25 °C gemessen

**Ansprüche**

1. Copolyamide erhalten durch Polykondensation von äquimolaren Mengen

I. wenigstens einer aliphatischen oder cycloaliphatischen Dicarbonsäure mit bis zu $C_{20}$ und/oder einer aromatischen Dicarbonsäure mit $C_7$-$C_{20}$ außer Azelainsäure und gegebenenfalls Isophthalsäure und/oder Adipinsäure und

II. einem Amingemisch bestehend aus

1. 0,1 bis 100 Mol-% von Gemischen cycloaliphatischer Amine, die sich zusammensetzen aus

a) 0 bis 3 Mol-% 4-Aminodicyclohexylmethan
b) 70 bis 99 Mol-% 4,4'-Diaminodicyclohexylmethanen
c) 1 bis 30 Mol-% 2,4'-Diaminodicyclohexylmethanen
d) 0 bis 2 Mol-% 2,2'-Diaminodicyclohexylmethanen und
e) 0 bis 15 Mol-% von polynuclearen Polyaminen der allgemeinen Formel (A)

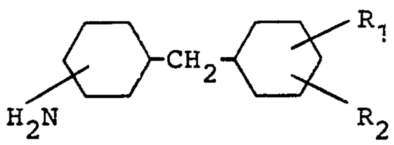 (A)

mit $R_1 = NH_2$, H und 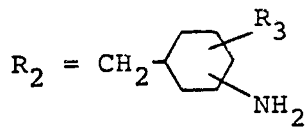

wobei $R_3$ = H, 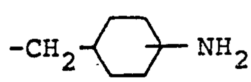 bedeutet, und

2. 0 bis 99,9 Mol-% wenigstens eines aliphatischen oder von 1) verschiedenen cycloaliphatischen Diamins mit mindestens 6 C-Atomen, wobei die Summe aus 1) und 2) bzw. a) bis e), jeweils 100 Mol-% betragen muß.

2. Copolyamide gemäß Anspruch 1, dadurch gekennzeichnet, daß als Dicarbonsäurekomponente Adipinsäure und/oder Isophthalsäure und gegebenenfalls bis zu 10 Mol-% Terephthalsäure verwendet werden.

3. Copolyamide gemäß Anspruch 1, dadurch gekennzeichnet, daß als Komponente 2) Hexamethylendiamin verwendet wird.

4. Copolyamide gemäß Ansprüchen 1-3, dadurch gekennzeichnet, daß sich das Amingemisch II aus 0,5 bis 20 Mol-% der Komponenten 1) und 80-99,5 Mol-% der Komponenten 2) zusammensetzt.

5. Copolyamide gemäß Ansprüchen 1-4, dadurch gekennzeichnet, daß sich das Amingemisch II aus 70-100 Mol-% der Komponenten 1) und 0-30 Mol-% der Komponenten 2) zusammensetzt.

6. Formkörper aus Copolyamiden, erhalten nach Ansprüchen 1 bis 5.

**Claims**

1. Copolyamides obtained by the polycondensation of equimolar quantities of

I. at least one aliphatic or cycloaliphatic dicarboxylic acid containing up to 20 C-atoms and/or aromatic dicarboxylic acid containing from 7 to 20 C-atoms, apart from azelaic acid, and optionally isophthalic acid and/or adipic acid and

II. an amine mixture consisting of

1. from 0.1 to 100 mole percent of mixtures of cycloaliphatic amines composed of

a) from 0 to 3 mole percent of 4-aminodicyclohexylmethane
b) from 70 to 99 mole percent of 4,4'-diaminodicylohexylmethanes
c) from 1 to 30 mole percent of 2,4'-diaminodicyclohexylmethanes
d) from 0 to 2 mole percent of 2,2'-diaminodicyclohexylmethanes and
e) from 0 to 15 mole percent of polynuclear polyamines corresponding to general formula (A)

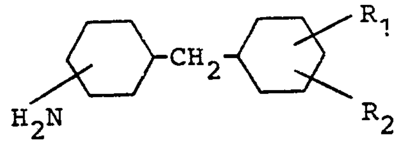 (A)

with $R_1 = NH_2$, H and $R_2$ = 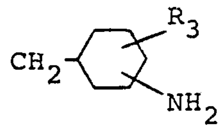

where $R_3$ = H, 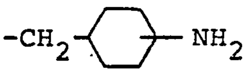 and

2. from 0 to 99.9 mole percent of at least one aliphatic diamine or cycloaliphatic diamine different from 1) containing at least 6 C-atoms, the sum of 1) and 2) and of a) to e) having to amount to 100 mole percent in either case.

2. Copolyamides as claimed in Claim 1, characterised in that adipic acid and/or isophthalic acid and optionally up to 10 mole percent of terephthalic acid are used as the dicarboxylic acid component.

3. Copolyamides as claimed in Claim 1, characterised in that hexamethylene diamine is used as component 2).

4. Copolyamides as claimed in Claims 1 to 3, characterised in that the amine mixture II consists of from 0.5 to 20 mole percent of component 1) and from 80 to 99.5 mole percent of component 2).

5. Copolyamides as claimed in Claims 1 to 4, characterised in that the amine mixture II consists of from 70 to 100 mole percent of component 1) and from 0 to 30 mole percent of component 2).

6. Mouldings of copolyamides obtained in accordance with Claims 1 to 5.

**Revendications**

1. Copolyamides obtenus par polycondensation de quantités équimolaires de :

I. au moins un acide dicarboxilique aliphatique ou dicycloaliphatique comportant jusqu'à 20 atomes de carbone et/ou un acide dicarboxylique aromatique comportant 1 à 20 atomes de carbone, outre l'acide azélaïque et éventuellement l'acide isophtalique et/ou l'acide adipique, et

II. un mélange d'amines consistant en

1. 0,1 à 100 moles % de mélanges d'amines cycloaliphatiques, qui se composent de :

a) 0 à 3 moles % du 4-aminodicyclohexylméthane,

b) 70 à 99 moles % de 4,4'-diaminodicyclohexylméthanes,

c) 1 à 30 moles % de 2,4'-diaminodicyclohexylméthanes et

d) 0 à 2 moles % de 2,2'-diaminodicyclohexylméthanes et

e) 0 à 15 moles % de polyamines polynucléaires de formule générale (A)

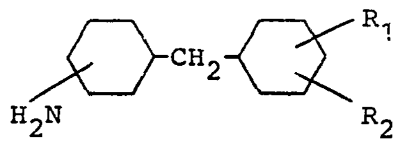

(A)

dans laquelle

$R^1$ représente $NH_2$, H, et $R_2$ représente 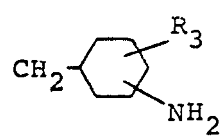

où $R_3$ représente H, 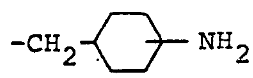 et

2. 0 à 99 moles % d'au moins une diamine aliphatique ou cycloaliphatique différente (1) et comportant au moins 6 atomes de carbone, la somme (1) et (2) ou de (a) à (e) devant chaque fois s'élever à 100 moles %.

2. Copolyamides selon la revendication 1, caractérisés en ce qu'on utilise comme constituant acide dicarboxylique l'acide adipique et/ou l'acide isophtalique et éventuellement jusqu'à 10 moles % d'acide téréphtalique.

3. Copolyamides selon la revendication 1, caractérisés en ce qu'on utilise comme constituant (2) l'hexaméthylènediamine.

4. Copolyamides selon l'une quelconque des revendications 1 à 3, caractérisés en ce que le mélange II d'amines consiste en 0,5 à 20 moles % du constituant (1) et en 80 à 99,5 moles % du constituant (2).

5. Copolyamides selon l'une quelconque des revendications 1 à 4, caractérisés en ce que le mélange II des amines consiste en 70 à 100 moles % des constituants (1) et 0 à 30 moles % des constituants (2).

6. Objet moulé en des copolyamides, obtenus selon l'une quelconque des revendications 1 à 5.